# EUROPEAN PATENT APPLICATION

(11) **EP 4 375 470 A1**
(43) Date of publication of application: **29.05.2024**
(21) Application number: 22845908.7
(22) Date of filing: 19.07.2022
(51) Int. Cl.: E06B 3/663, C03C 27/06

(54) **SPACER AND MULTI-LAYERED GLASS**

(30) Priority: 21.07.2021 JP 2021120780
(71) Applicant: Kyocera Corporation, Kyoto-shi, Kyoto 612-8501 (JP)
(72) Inventor: KIYOTA, Satoshi, Kyoto-shi, Kyoto 612-8501 (JP)
(74) Representative: Viering, Jentschura & Partner mbB Patent- und Rechtsanwälte
(86) International application number: PCT/JP2022/028027
(87) International publication number: WO 2023/002975

(57) **Abstract**

A spacer of the present disclosure is interposed between a first glass substrate and a second glass substrate opposing each other, and is disposed in contact with the first glass substrate and the second glass substrate. The spacer of the present disclosure includes a first contact surface disposed in contact with the first glass substrate, a second contact surface disposed in contact with the second glass substrate, and a side surface positioned between the first contact surface and the second contact surface. A mean value RΔq1 of a root-mean-square slope in a roughness curve of the first contact surface is larger than a mean value RΔq2 of a root-mean-square slope in a roughness curve of the side surface.

## Description

### TECHNICAL FIELD

The present disclosure relates to a spacer used for a multi-layered glass having a pair of glass substrates layered with a decompressed internal space interposed therebetween, and the multi-layered glass.

### BACKGROUND OF INVENTION

A known multi-layered glass has a pair of glass substrates disposed opposite to each other whose outer peripheries are sealed with a seal material to generate a space inside, and air inside the space is exhausted to reduce pressure. For example, Patent Document 1 discloses a plurality of spacers interposed in an internal space for holding the internal space positioned between a pair of glass substrates in a multi-layered glass.

### CITATION LIST

### PATENT LITERATURE

Patent Document 1: JP 2018-104280 A

### SUMMARY

### SOLUTION TO PROBLEM

A spacer of the present disclosure is interposed between a first glass substrate and a second glass substrate opposing each other, and is disposed in contact with the first glass substrate and the second glass substrate. The spacer of the present disclosure includes a first contact surface disposed in contact with the first glass substrate, a second contact surface disposed in contact with the second glass substrate, and a side surface positioned between the first contact surface and the second contact surface. A mean value RΔq1 of a root-mean-square slope in a roughness curve of the first contact surface is larger than a mean value RΔq2 of a root-mean-square slope in a roughness curve of the side surface.

### BRIEF DESCRIPTION OF THE DRAWINGS

FIG. 1 is a schematic cross-sectional view of a multi-layered glass according to an embodiment of the present disclosure.
FIG. 2A is a schematic plan view illustrating a first glass substrate mounted with a plurality of spacers on a surface thereof in the multi-layered glass illustrated in FIG. 1.
FIG. 2B is a schematic plan view illustrating a second glass substrate in the multi-layered glass illustrated in FIG. 1.
FIG. 3A is a plan view illustrating a spacer according to an embodiment of the present disclosure.
FIG. 3B is a side view of FIG. 3A.
FIG. 4A is a plan view illustrating a spacer according to an embodiment of the present disclosure.
FIG. 4B is a side view of FIG. 4A.
FIG. 5A is a plan view illustrating a spacer according to an embodiment of the present disclosure.
FIG. 5B is a side view of FIG. 5A.

### DESCRIPTION OF EMBODIMENTS

The thermal conductivity of a spacer 3 is larger than the thermal conductivity of an internal space 4. Therefore, heat is conducted via the spacer 3 between a first glass substrate 1 and a second glass substrate 2 (hereinafter, these may be described as a pair of glass substrates 1 and 2) opposing each other. As a result, the heat insulating properties of a multi-layered glass 100 are likely to decrease. When a side surface 300 of the spacer 3 comes into contact with any of the pair of glass substrates 1 and 2 at the time of mounting the spacer 3 on the pair of glass substrates 1 and 2, shedding of particles is likely to occur on the side surface 300 of the spacer 3. As a result, shedded particles float in the internal space 4, and the light transparency of the multi-layered glass 100 is likely to decrease.

In the spacer 3 of the present disclosure, the mean value RΔq1 of the root-mean-square slope in the roughness curve of a first contact surface 301 is larger than the mean value RΔq2 of the root-mean-square slope in the roughness curve of the side surface 300. This can reduce the contact area between the spacer 3 and the first glass substrate 1, and can improve the heat insulating properties of the multi-layered glass 100. Particle shedding from the side surface 300 can be reduced, and the light transmittance of the multi-layered glass 100 can be improved.

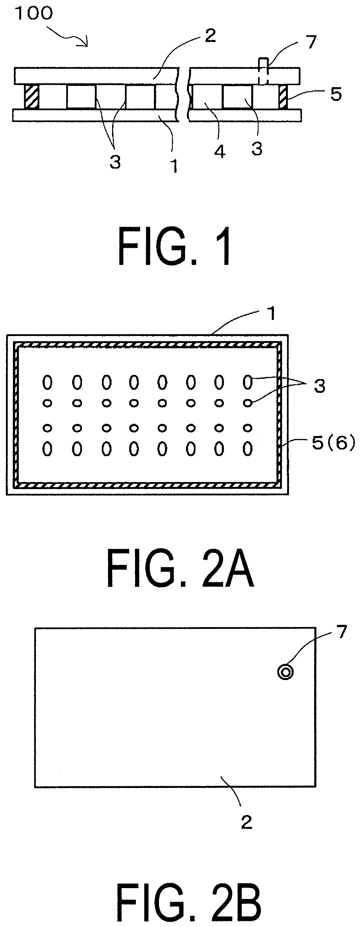

Hereinafter, the spacer 3 for a multi-layered glass and the multi-layered glass 100 according to an embodiment of the present disclosure will be described with reference to the drawings. FIG. 1 is a schematic cross-sectional view of the multi-layered glass 100, and FIGs. 2A and 2B are schematic plan views illustrating a state where a plurality of spacers 3 are mounted on a surface of the first glass substrate 1.

As illustrated in FIG. 1, the multi-layered glass 100 according to the present embodiment includes the first glass substrate 1, the second glass substrate 2 disposed opposite to the first glass substrate 1, the spacers 3 interposed between the first glass substrate 1 and the second glass substrate 2, the internal space 4 positioned between the first glass substrate 1 and the second glass substrate 2, a peripheral edge portion 5 of the first glass substrate 1, a seal portion 6 sealing the peripheral edge portion 5, and an exhaust pipe 7 for exhausting the internal space 4.

The first glass substrate 1 and the second glass substrate 2 are, for example, rectangular flat glass plates. Examples of the first glass substrate 1 and the second glass substrate 2 include float glass such as tempered glass. The thicknesses of the first glass substrate 1 and the second glass substrate 2 are, for example, equal to or greater than 1 mm and equal to or less than 5 mm. As illustrated in FIG. 2B, the second glass substrate 2 has the same dimensions as those of the first glass substrate 1.

The spacers 3 are interposed in the internal space 4 positioned between the pair of glass substrates 1 and 2 opposing each other, and are disposed in contact with the pair of glass substrates 1 and 2. Thus, the internal space 4 is held. The plurality of spacers 3 are disposed between the first glass substrate 1 and the second glass substrate 2 at predetermined intervals, for example. The disposition interval of the spacers 3 is, for example, 1 to 3 cm pitch.

As illustrated in FIG. 2A for example, the spacers 3 are placed on the surface of the first glass substrate 1 at predetermined intervals. At this time, the surface of the first glass substrate 1 is held horizontally. Therefore, when the spacers 3 are placed at predetermined positions on the surface of the first glass substrate 1, inadvertent movement of the spacers 3 is reduced.

The internal space 4 is a space surrounded by the first glass substrate 1, the second glass substrate 2, and the seal portion 6. By being exhausted from the exhaust pipe 7, the internal space 4 is brought into a vacuum state or a depressurized state. This reduces heat exchange between the first glass substrate 1 and the second glass substrate 2, and can enhance the heat insulating properties of the multi-layered glass 100. The depressurized state is, for example, equal to or greater than 10⁻⁵ Pa and equal to or less than 10⁻¹ Pa.

The seal portion 6 is positioned at the peripheral edge portion 5 of the first glass substrate 1. For example, the seal portion 6 is positioned on the entire circumference of the peripheral edge portion 5 of the first glass substrate 1 and surrounds the internal space 4. The height of the seal portion 6 is, for example, the same as the height of the spacer 3. The seal portion 6 is made of, for example, a low-melting-point glass frit. Examples of the low-melting-point glass frit that can be used as a seal material include a bismuth-based seal and a frit paste containing equal to or greater than 70 mass% of Bi₂O₃, equal to or less than 15 mass% of each of B₂O₃ and ZnO, and equal to or greater than 5 mass% of a mixture of organic substances such as ethyl cellulose and terpineol.

The seal portion 6 can be formed, for example, by the following method. The seal material is applied to the peripheral edge portion 5 of the first glass substrate 1 using a dispenser and then dried. Next, the second glass substrate 2 is disposed opposite to the first glass substrate 1, and in this state, the pair of glass substrates 1 and 2 are placed in a furnace and heated to melt the low-melting-point glass frit, and the peripheries of the pair of glass substrates 1 and 2 are sealed to form the seal portion 6. The seal portion 6 is formed, for example, by applying glass frit and heating and melting the glass frit.

The exhaust pipe 7 exhausts the internal space 4 to bring the internal space 4 into a vacuum or depressurized state. The exhaust pipe 7 penetrates the second glass substrate 2 in a thickness direction, for example.

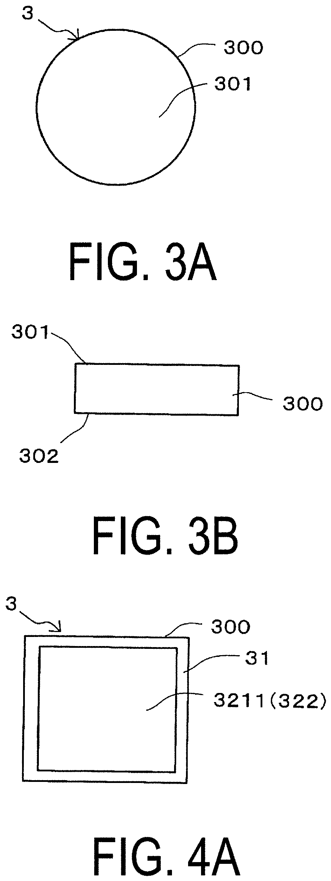

As illustrated in FIGs. 3A and 3B, the spacer 3 of the present embodiment includes the first contact surface 301 disposed in contact with the first glass substrate 1, a second contact surface 302 disposed in contact with the second glass substrate 2, and the side surface 300 positioned between the first contact surface 301 and the second contact surface 302. The side surface 300 illustrated in FIGs. 3A and 3B is directly connected to the first contact surface 301 and the second contact surface 302.

The mean value RΔq1 of the root-mean-square slope in the roughness curve of the first contact surface 301 is larger than the mean value RΔq2 of the root-mean-square slope in the roughness curve of the side surface 300. As a result, when the mean value RΔq1 of the root-mean-square slope in the roughness curve of the first contact surface 301 is large, the slope of the unevenness of the first contact surface 301 increases. Therefore, the contact area with the first glass substrate 1 is reduced, and the heat insulating properties of the multi-layered glass 100 can be improved.

The mean value RΔq2 of the root-mean-square slope in the roughness curve of the side surface 300 is small. Therefore, the unevenness of the surface property of the side surface 300 becomes gentle. As a result, even if the side surface 300 comes into contact with the first glass substrate 1 or the second glass substrate 2 when the spacer 3 is attached into the multi-layered glass 100, the number of particles shed from the side surface 300 can be reduced. Therefore, the number particles floating in the internal space 4 of the multi-layered glass 100 is reduced, and the light transmittance of the multi-layered glass 100 can be improved.

The mean value RΔq2 of the root-mean-square slope in the roughness curve of the side surface 300 is small. Therefore, it is difficult for the spacer 3 to exchange heat with the internal space 4 via the side surface 300. As a result, the temperature of the internal space 4 can be stabilized. Similarly to the first contact surface 301, a mean value RΔq3 of a root-mean-square slope in a roughness curve of the second contact surface 302 may be larger than the mean value RΔq2 of the root-mean-square slope in the roughness curve of the side surface 300. As a result, the same effects as those of a first end portion 3211 can be obtained.

The mean values RΔq1 and RΔq3 of the root-mean-square slope are, for example, equal to or greater than 0.3 and equal to or less than 0.7. The mean value RΔq2 of the root-mean-square slope is, for example, equal to or greater than 0.01 and equal to or less than 0.29. The difference between the mean values RΔq1 and RΔq3 of the root-mean-square slope and the mean value RΔq2 of the root-mean-square slope is, for example, equal to or greater than 0.05 and equal to or less than 0.65.

The root-mean-square slope in the roughness curves of the side surface 300, the first contact surface 301, and the second contact surface 302 can be measured in accordance with JIS B 0601:2001 using a laser microscope (ultra-depth color 3D shape measuring microscope (VK-X1000 or its successor model), manufactured by KEYENCE Corporation). Measurement conditions are preferably an illumination method of coaxial epi-illumination, a measurement magnification of 480 times, a cutoff value λs of null, a cutoff value λc of 0.08 mm, a cutoff value λf of null, with correction of a termination effect, and a measurement range of each surface of 710 µm × 533 µm. Then, four measurement target lines are preferably drawn at substantially equal intervals in each measurement range, line roughness measurement may be performed, and the mean value of the root-mean-square slope may be calculated. When the side surface 300 is a measurement target, the length per line is, for example, 240 µm. When the first contact surface 301 and the second contact surface 302 are measurement targets, the length per line is, for example, 300 µm.

In the spacer 3 of the present embodiment, the mean value Rsk1 of kurtosis in the roughness curve of the first contact surface 301 is larger than the mean value Rsk2 of kurtosis in the roughness curve of the side surface 300. Due to this, the mean value Rsk1 of kurtosis in the roughness curve of the first contact surface 301 is large. Therefore, the kurtosis of a projection of the first contact surface 301 increases. As a result, the contact area with the first glass substrate 1 decreases, and the contact thermal resistance with the first glass substrate 1 increases. Therefore, the heat insulating properties of the multi-layered glass 100 can be further improved.

The mean value Rsk2 of kurtosis in the roughness curve of the side surface 300 is small. Therefore, the kurtosis of a projection of the side surface 300 decreases. As a result, even if the side surface 300 comes into contact with the first glass substrate 1 or the second glass substrate 2 when the spacer 3 is attached in the multi-layered glass 100, the number of particles shed from the side surface 300 can be reduced. Therefore, the number of particles floating in the internal space 4 of the multi-layered glass 100 is further reduced, and the light transmittance of the multi-layered glass 100 can be further improved.

The mean value Rsk2 of kurtosis in the roughness curve of the side surface 300 is small. Therefore, heat exchange with the internal space 4 becomes difficult via the side surface 300, and the temperature of the internal space 4 is stabilized. Similarly to the first contact surface 301, the mean value Rsk3 of kurtosis in the roughness curve of the second contact surface 302 may be larger than the mean value Rsk2 of kurtosis in the roughness curve of the side surface 300.

The mean values Rsk1 and Rsk3 of kurtosis are, for example, equal to or greater than 1.7 and equal to or less than 5.6. The mean value Rsk2 of kurtosis is, for example, equal to or greater than 0.6 and equal to or less than 3.1. The difference between the mean values Rsk1 and Rsk3 of kurtosis and the mean value Rsk2 of kurtosis is, for example, equal to or greater than 1.5 and equal to or less than 4.5. The kurtosis in the roughness curves of the side surface 300, the first contact surface 301, and the second contact surface 302 may be determined by the same measurement method as the measurement method for the root-mean-square slope described above.

In the spacer 3 of the present embodiment, the side surface 300 is a fired surface. The fired surface is a surface in an as-fired state where processing such as grinding and polishing is not performed after firing a ceramic. This suppresses generation of a crushed layer and can reduce the number of particles shed from the side surface 300. As a result, the number of particles floating in the internal space 4 of the multi-layered glass 100 is further reduced, and the light transmittance of the multi-layered glass 100 can be further improved.

The fact that the side surface 300 is a fired surface can be confirmed by observing the side surface 300 at a magnification of 480 times using the ultra-depth color 3D shape measuring microscope (VK-X1000 or its successor model).

The spacer 3 of the present embodiment has, for example, a plate shape of a disk shape or a flat plate shape, or a columnar shape of a cylindrical shape or a polygonal columnar shape. FIGs. 3A and 3B illustrate examples of the spacer 3 having a disk shape. As illustrated in FIGs. 4A to 5B, the spacer 3 may further include a center portion 31 having a plate shape or a columnar shape, the first end portion 3211 protruding from the center portion 31, and a second end portion 3212 positioned on a side opposite to the first end portion 3211 and protruding from the center portion 31. The side surface 300 is positioned on the outer edge of the center portion 31, a first contact surface 322 is positioned on the first glass substrate 1 side of the first end portion 3211, and a second contact surface 323 is positioned on the second glass substrate 2 side of the second end portion 3212.

The center portion 31 has, for example, a plate shape such as a disk shape or a flat plate shape, or a columnar shape such as a cylindrical shape or a polygonal columnar shape. The first end portion 3211 and the second end portion 3212 have, for example, a plate shape such as a disk shape or a flat plate shape. The first end portion 3211 and the second end portion 3212 have a tapered shape such as a spherical cap shape, a spherical segment shape, a circular truncated cone shape, or a polygonal frustum shape.

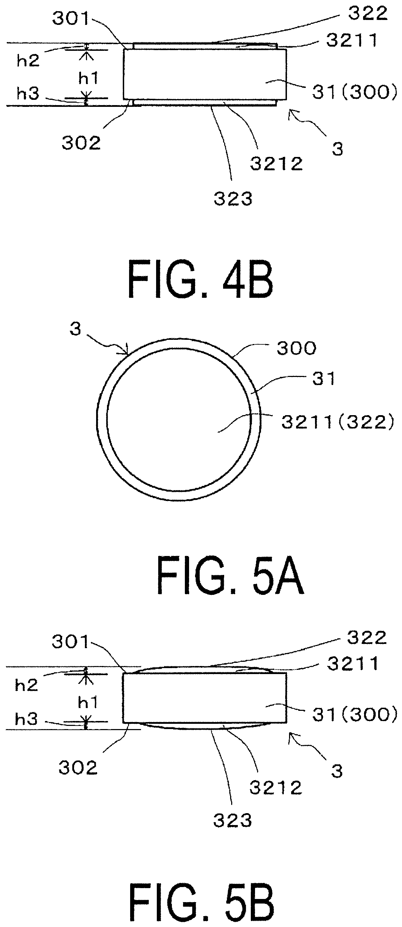

FIGs. 4A and 4B illustrate examples of the center portion 31, the first end portion 3211, and the second end portion 3212 having flat plate shapes. FIGs. 5A and 5B illustrate examples of the center portion 31 having a disk shape and the first end portion 3211 and the second end portion 3212 having spherical cap shapes.

In a case where the center portion 31 has a flat plate shape or a polygonal columnar shape, and the first end portion 3211 and the second end portion 3212 have a flat plate shape, the width perpendicular to the height direction of the first end portion 3211 may be smaller than the width perpendicular to the height direction of the center portion 31 as illustrated in FIGs. 4A and 4B. As a result, the contact area between the first end portion 3211 and the first glass substrate 1 is reduced, and the heat insulating properties of the multi-layered glass 100 can be improved. Since the width of the center portion 31 is large, the mechanical strength of the spacer 3 can be enhanced, and the reliability of the spacer 3 can be enhanced. Similarly to the first end portion 3211, the width perpendicular to the height direction of the second end portion 3212 may be smaller than the width perpendicular to the height direction of the center portion 31. Here, the width perpendicular to the height direction is a length where a cross section including an axis in the height direction is projected.

Among the widths perpendicular to the height direction of the first end portion 3211 and the second end portion 3212, the width at a position in contact with the center portion 31 is, for example, equal to or greater than 0.34 mm and equal to or less than 0.54 mm. The width perpendicular to the height direction of the center portion 31 is, for example, equal to or greater than 0.37 mm and equal to or less than 0.64 mm. However, the width perpendicular to the height direction of the center portion 31 is larger than the width at the position in contact with the center portion 31 among the widths perpendicular to the height direction of the first end portion 3211 and the second end portion 3212. The difference between the width perpendicular to the height direction of the center portion 31 and the width at the position in contact with the center portion 31 of the first end portion 3211 and the second end portion 3212 is, for example, equal to or greater than 30 µm and equal to or less than 100 µm.

When the center portion 31 has a disk shape or a columnar shape, and the first end portion 3211 and the second end portion 3212 have a spherical cap shape, a spherical segment shape, or a circular truncated cone shape, the diameter perpendicular to the height direction of the first end portion 3211 may decrease from the center portion 31 side toward the opposite side as illustrated in FIG. 5B. As a result, the mechanical strength of the first end portion 3211 can be enhanced while reducing the contact area between the first end portion 3211 and the first glass substrate 1. Similarly to the first end portion 3211, the diameter of the second end portion 3212 perpendicular to the height direction may decrease from the center portion 31 side toward the opposite side.

Among the diameters perpendicular to the height direction of the first end portion 3211 and the second end portion 3212, the diameter at a position in contact with the center portion 31 is, for example, equal to or greater than 0.34 mm and equal to or less than 0.54 mm. The diameter perpendicular to the height direction of the center portion 31 is, for example, equal to or greater than 0.37 mm and equal to or less than 0.64 mm. However, the diameter perpendicular to the height direction of the center portion 31 is larger than the diameter at the position in contact with the center portion 31 among the diameters perpendicular to the height direction of the first end portion 3211 and the second end portion 3212. The difference between the diameter perpendicular to the height direction of the center portion 31 and the diameter at the position in contact with the center portion 31 of the first end portion 3211 and the second end portion 3212 is, for example, equal to or greater than 30 µm and equal to or less than 100 µm.

The first end portion 3211 may have a spherical cap shape, as illustrated in FIGs. 5A and 5B. In this case, the first contact surface 322 has a curved surface shape, a part of which comes into contact with the first glass substrate 1. Therefore, the contact area between the first end portion 3211 and the first glass substrate 1 can be reduced. Similarly to the first end portion 3211, the second end portion 3212 may have a spherical cap shape.

When the first end portion 3211 has a spherical cap shape, the radius of the sphere of the first contact surface 322 is preferably equal to or greater than 0.8 mm and equal to or less than 1.6 mm. With the radius within this range, both the rigidity and the heat insulating properties of the first end portion 3211 can be enhanced. Even if the second end portion 3212 has a spherical cap shape, the radius of the second contact surface 323 is preferably in the above range.

Each radius of the first contact surface 322 and the second contact surface 323 can be measured using a laser microscope (ultra-depth color 3D shape measuring microscope (VK-X1100 or its successor model), manufactured by KEYENCE Corporation). The measurement conditions are the same as the measurement conditions for determining the root-mean-square slopes of the first contact surface 322 and the second contact surface 323, and profile measurement may be performed for each measurement range.

As illustrated in FIGs. 4B and 5B, the height (h1) of the center portion 31 may be larger than the total of the height (h2) of the first end portion 3211 and the height (h3) of the second end portion 3212. This can enhance the mechanical strength of the spacer 3. Even if the height (h1) of the center portion 31 is increased, the mean value RΔq2 of the root-mean-square slope in the roughness curve of the side surface 300 is small. Therefore, the number of particles shed from the side surface 300 can be reduced. Since the total of the height (h2) of the first end portion 3211 and the height (h3) of the second end portion 3212 is small, bowing of the spacer 3 can be suppressed.

The height (h1) of the center portion 31 is, for example, equal to or greater than 0.14 mm and equal to or less than 0.18 mm. The total of the height (h2) of the first end portion 3211 and the height (h3) of the second end portion 3212 is, for example, equal to or greater than 0.02 mm and equal to or less than 0.06 mm. The height (h2) of the first end portion 3211 and the height (h3) of the second end portion 3212 may be the same.

In the spacer 3 of the present embodiment, the area occupancy of porosity at the first end portion 3211 is larger than the area occupancy of porosity at the outer edge of the center portion 31. As a result, the contact area between the first glass substrate 1 and the spacer 3 is reduced, and the heat insulating properties of the multi-layered glass 100 are improved.

Since the area occupancy of the porosity at the outer edge of the center portion 31 is small, the side surface 300 positioned at the outer edge of the center portion 31 becomes dense. As a result, the mechanical strength of the side surface 300 can be maintained, and the mechanical strength of the spacer 3 can also be maintained. Since the mechanical strength of the side surface 300 is high, even if the side surface 300 comes into contact with the first glass substrate 1 or the second glass substrate 2 when the spacer 3 is attached into the multi-layered glass 100, the possibility that shedding of particles occurs from the side surface 300 is further reduced. As a result, the number of particles floating in the internal space 4 of the multi-layered glass 100 is further reduced, and the light transmittance of the multi-layered glass 100 can be further improved. Here, the outer edge in the center portion 31 is a region up to 20 µm in the width direction from the side surface 300.

In particular, the difference between the area occupancy of the porosity in the first end portion 3211 and the area occupancy of the porosity in the outer edge of the center portion 31 is preferably equal to or greater than 0.2%. In order to reduce the number of particles shedded from the first contact surface 322 and generated from inside the pores and floating, the first end portion 3211 is preferably dense, and the area occupancy of the porosity in the first end portion 3211 is preferably equal to or less than 2%, particularly equal to or less than 1%.

In order to measure the area occupancy of the porosity, polishing is performed with a tin plate using diamond abrasive grains having a mean grain diameter D₅₀ of 0.5 µm, for example, in the height direction from the first contact surface 322 toward the center portion 31 or in the diameter (width) direction from the side surface 300 toward the inside of the center portion 31. The polished surface obtained by this polishing is captured using a scanning electron microscope (SEM) at a magnification of 10,000 times and a measurement target range of, for example, 12 µm in length in the lateral direction and 9 µm in length in the longitudinal direction. Next, the measurement range is set from the captured images, and the porosity per unit area can be determined by analysis using image analysis software (for example, WinROOF, manufactured by MITANI Corporation). In the analysis, the threshold of the equivalent circle diameter of the porosity is 0.21 µm, and the equivalent circle diameter of less than 0.21 µm is not a target of calculation of the area occupancy.

The spacer 3 of the present embodiment is made of, for example, a ceramic containing, as a main constituent, zirconium oxide, mullite, forsterite, cordierite, steatite, alkali metal aluminosilicate, aluminum titanate, or zinc oxide. By making the spacer 3 out of a ceramic, generation of outgas from the spacer 3 can be reduced. A high thermal insulation effect can be maintained over a long period of time. It is possible to improve the mechanical strength of the spacer 3. The alkali metal aluminosilicate is, for example, β-spodumene. When the ceramic contains zirconium oxide as the main constituent, the ceramic preferably has translucency. The ceramic having translucency is, for example, a ceramic containing, as a main constituent, zirconium oxide that forms a stabilizer of calcium oxide, magnesium oxide, yttrium oxide, scandium oxide, or cerium oxide, and lanthanum in a solid solution state.

In a case where the ceramic contains zinc oxide as a main constituent, the ceramic may contain Al at a mass percentage equal to or larger than 1.9 mass% and equal to or smaller than 3.8 mass% in terms of oxide among 100 mass% of constituents constituting the ceramic. Since Al is contained in this range, the sintering temperature can be lowered and the thermal conductivity can be lowered. When the ceramic contains eucryptite as a main constituent, Ti or Zr may be contained at a mass percentage equal to or smaller than 20 mass% in terms of oxide among 100 mass% of the constituents constituting the ceramic. Since Ti or Zr is contained in this range, the thermal conductivity can be lowered and the rigidity can be increased.

The spacer 3 may be a ceramic made of a composite compound of aluminum oxide and zirconium oxide (hereinafter, the ceramic made of this composite compound may be referred to as "composite ceramic"). The composite ceramic contains, for example, a content of aluminum oxide equal to or larger than 20 mass% and equal to or smaller than 80 mass%, and a content of zirconium oxide equal to or larger than 80 mass% or equal to or smaller than 20 mass%. The composite ceramic may contain Si, Ti, and Mg, as oxides of each of Si, Ti, and Mg, and the total content thereof is equal to or larger than 0.6 mass% and equal to or smaller than 4.5 mass% in terms of oxide. The composite ceramic can adjust the thermal conductivity and static modulus of elasticity indicating rigidity by adjusting each content of aluminum oxide and zirconium oxide.

The main constituent in the ceramic means a constituent occupying equal to or greater than 80 mass% of 100 mass% of the constituent constituting the ceramic. The constituents of the ceramic can be identified by using an X-ray diffractometer (XRD), and the contents can be determined by Rietveld refinement. The metal element obtained by an X-ray fluorescence spectrometer (XRF) or an inductively coupled plasma (ICP) emission spectrophotometer may be determined by converting the metal element into the identified constituents.

The first end portion 3211 may be made of a ceramic having the same main constituent as the center portion 31 or a ceramic having a different main constituent.

An example of a method for manufacturing the spacer 3 made of the above-described ceramic will be described. For example, when the spacer 3 is made of a ceramic containing, as a main constituent, zirconium oxide, first, a zirconium oxide powder as a main constituent, an yttrium oxide powder as a stabilizer, a dispersant for dispersing the zirconium oxide powder as necessary, and a binder such as polyvinyl alcohol are wet-mixed for 40 to 50 hours with a barrel mill, a rotary mill, a vibrating mill, a bead mill, a sand mill, an agitator mill, or the like to make a slurry.

Here, the mean grain diameter (D₅₀) of the zirconium oxide powder is equal to or greater than 0.1 µm and equal to or less than 2.2 µm, and the content of the yttrium oxide powder in 100 mass% of the total of the powder is equal to or greater than 3.6 mass% and equal to or less than 8.8 mass%. Next, a predetermined amount of an organic binder such as paraffin wax, polyvinyl alcohol (PVA), and polyethylene glycol (PEG) is weighed and added to the slurry. A thickening stabilizer, a dispersant, a pH adjuster, an antifoamer, and the like may be added. As the stabilizer, in place of yttrium oxide (Y₂O₃), at least any one type of powder selected from the group consisting of cerium oxide (CeOz), dysprosium oxide (D₂O₃), magnesium oxide (MgO), calcium oxide (CaO), and the like may be used.

When the spacer 3 is made of a ceramic containing cordierite as a main constituent, first, a synthetic cordierite (2MgO · 2Al₂O3 · 5SiO₂) powder having a mean grain diameter of equal to or greater than 0.5 µm and equal to or less than 5 µm, a magnesium aluminate (MgAl₂O₄) powder having a mean grain diameter of equal to or greater than 0.5 µm and equal to or less than 3 µm, and an oxide powder of Y, Yb, Er, or Ce having a mean grain diameter of equal to or greater than 0.5 µm and equal to or less than 2 µm are prepared. The synthetic cordierite powder and the magnesium aluminate powder constitute the main constituent in the present disclosure, and the oxide powder of any one type selected from the group consisting of Y, Yb, Er, and Ce constitutes a secondary constituent. The synthetic cordierite powder is a powder synthesized in advance in a range of equal to or greater than 11.77 mass% and equal to or less than 13.3 mass% of Mg in terms of oxide, equal to or greater than 29.1 mass% and equal to or less than 33.8 mass% of Al in terms of oxide, and equal to or greater than 52.0 mass% and equal to or less than 53.6 mass% of Si in terms of oxide, excluding the additive amount of the magnesium aluminate powder from 100 mass% of the main constituent.

Then, predetermined amounts of the synthetic cordierite powder and the magnesium aluminate powder, for example, an amount equal to or larger than 93.5 mass% and equal to or smaller than 99.9 mass% of the synthetic cordierite powder, and an amount equal to or larger than 0.01 mass% and equal to or smaller than 6.5 mass% of the magnesium aluminate powder, are weighed. Next, the secondary constituent is weighed so as to become in a range of equal to or greater than 4.5 mass% and equal to or less than 15.0 mass% with respect to 100 mass% of the total of the synthetic cordierite powder and the magnesium aluminate powder, and wet-mixed for equal to or greater than 5 hours and equal to or less than 30 hours using a ball mill until the mean grain diameter becomes equal to or less than 2 µm to obtain the slurry. The addition of the organic binder or the like is preferably performed as described above.

Next, the slurry containing the zirconium oxide powder or the synthetic cordierite powder is spray-dried to obtain granules. Next, each of these granules is put in a forming die and formed. As the forming process, pressure forming, injection forming, or the like can be used. The forming pressure in the pressure forming is, for example, equal to or larger than 78 MPa and equal to or smaller than 128 MPa.

Next, a formed body is fired to obtain a ceramic sintered body. The firing is performed, for example, in an air atmosphere. In the case of obtaining a ceramic containing zirconium oxide as a main constituent, the firing temperature is equal to or greater than 1400 °C and equal to or less than 1500 °C. In the case of obtaining a ceramic containing cordierite as a main constituent, the firing temperature is equal to or greater than 1340 °C and equal to or less than 1440 °C. In any case, the holding time is preferably made to be equal to or greater than 1 hour and equal to or less than 4 hours. The ceramic sintered body obtained by firing can be used as the spacer 3 as is. If necessary, grinding and/or polishing may be performed on the ceramic sintered body to form the first contact surface and the second contact surface. This results in the spacer 3 having a high dimensional accuracy.

Here, in the present embodiment, in the forming process, by appropriately adjusting the surface property of the forming die used for pressure forming or injection forming, surface properties such as the root-mean-square slope of the spacer 3 or kurtosis can be obtained as desired. Specifically, the forming die includes a die having a forming space to be filled with granules, an upper punch that presses the granules filled in the forming space from above the forming space, and a lower punch that presses the granules from below the forming space. In order to make the mean value RΔq1 of the root-mean-square slope of the first contact surface larger than the mean value RΔq2 of the root-mean-square slope of the side surface, the mean value of the root-mean-square slope of a first pressing surface of the upper punch forming the first contact surface is preferably made larger than the mean value of the root-mean-square slope of the inner surface of the die. In order to make the mean value RΔq1 equal to or less than 0.7, the mean value of the root-mean-square slope of the first pressing surface of the upper punch is preferably made to be, for example, equal to or less than 0.88.

In order to make the mean value Rsk1 of kurtosis of the first contact surface larger than the mean value Rsk2 of kurtosis of the side surface, the mean value of kurtosis of the first pressing surface of the upper punch is preferably made larger than the mean value of kurtosis of the inner surface of the die. In order to obtain a spacer in which the difference between the mean value RΔq1 and the mean value RΔq2 is equal to or greater than 0.05, a forming die in which the difference between the mean value of the root-mean-square slopes of the first pressing surface of the upper punch and the mean value of the root-mean-square slopes of the inner surface of the die is preferably, for example, equal to or greater than 0.063 is used in consideration of shrinkage.

As a result, the mean value RΔq1 of the root-mean-square slope in the roughness curve of the first contact surface 322 can be made larger than the mean value RΔq2 of the root-mean-square slope in the roughness curve of the side surface 300. The mean value Rsk1 of kurtosis in the roughness curve of the first contact surface 301 can be made larger than the mean value Rsk2 of kurtosis in the roughness curve of the side surface 300.

Also, regarding the relationship between the second contact surface and the side surface, the mean value of the root-mean-square slope of each of the inner surface of the die and the first pressing surface of the lower punch and the mean value of the kurtosis are preferably adjusted with the same approach as that of the above-described method. Each of the upper punch and the lower punch includes a planar second pressing surface connected to the first pressing surface on the outer peripheral side of the first pressing surface. The second pressing surface forms an upper surface and a lower surface of the outer edge of the center portion.

In the forming process of the present embodiment, the spacer 3 having a desired shape can be obtained by forming the forming die used for pressure forming or injection forming into a desired shape. In the case of pressure forming, the forming pressure is, for example, equal to or greater than 98 MPa and equal to or less than 294 MPa. In order to make the area occupancy of the porosity at the first end larger than the area occupancy of the porosity at the outer edge of the center portion, the forming pressure is preferably made to be, for example, equal to or greater than 147 MPa and equal to or less than 294 MPa.

In the present embodiment, the side surface 300 of the spacer 3 can be made a fired surface by not performing processing such as grinding and polishing on the side surface 300 of the ceramic sintered body obtained by firing.

Another example of the method for manufacturing the spacer 3 made of the ceramic described above will be described. For example, the first end portion 3211, the second end portion 3212, and the center portion 31 are separately fabricated. Next, the first end portion 3211 and the second end portion 3212 that have been obtained are respectively joined to end surfaces of the center portion 31 by bonding or the like. In this manner, the first end portion 3211, the second end portion 3212, and the center portion 31 can be made of different materials.

A method for manufacturing the multi-layered glass 100 will be described. First, the surface of the first glass substrate 1 is horizontally held. Next, as illustrated in FIG. 2A, the plurality of spacers 3 are disposed on the surface of the first glass substrate 1 at predetermined intervals. For this, for example, each of the spacers 3 is held by a suction means (not illustrated) having an air suction port, and the spacer 3 is conveyed to a predetermined position on the surface of the first glass substrate 1. Next, the suction means is lowered at the position and placed on the surface of the first glass substrate 1. In that state, the air suction is stopped and the suction means is raised. The operation of changing to the original position is preferably repeated in preparation for the next suction. Suction and conveyance of the spacer 3 may be performed for each row, or may be performed for a plurality of examples at a time.

As another method, for example, a plate (not illustrated) provided with a plurality of through holes having a size through which only one spacer 3 can pass is placed on the surface of the first glass substrate 1. Next, a large number of the spacers 3 are scattered on the plate, and it is confirmed that the spacers 3 are fitted into all the through holes. Thereafter, by removing the plate together with the extra spacers 3, the plurality of spacers 3 can be disposed on the surface of the first glass substrate 1 at predetermined intervals. As described above, after the spacers 3 are disposed on the surface of the first glass substrate 1, the seal portion 6 is formed on the peripheral edge portion 5 of the first glass substrate 1.

Next, the air in the sealed internal space 4 between the pair of glass substrates 1 and 2 is exhausted and decompressed through the exhaust pipe 7 by, for example, a rotary pump or the like. Thereafter, the exhaust port is bonded and sealed with a metal lid (not illustrated) or the like. In this way, the multi-layered glass 100 is manufactured.

The embodiment of the present disclosure has been described above, but the present disclosure is not limited to the embodiment described above, and various modifications and enhancements can be made.

In the embodiment described above, an example of the spacer 3 made of a ceramic sintered body is illustrated. However, the spacer 3 may be made of, for example, a metal or a resin. Examples of the metal include stainless steel such as SUS 304 and SUS 316, and a metal having a relatively low thermal conductivity such as titanium or a titanium alloy. An example of the resin is polyvinylidene fluoride, polychlorotrifluoroethylene, polytetrafluoroethylene, polytetrafluoroethylene (PTFE) tetrafluoroethylene-perfluoroalkyl vinyl ether copolymer (PFA), or tetrafluoroethylene-hexafluoropropylene copolymer (ETFE). The spacer 3 may be a composite of different materials such as ceramics, metals, or resins. The first end portion 3211 and the center portion 31 may be made of different materials.

When the spacer 3 is made of a metal, the spacer 3 having a desired surface property can be obtained by using a powder metallurgy process and adjusting the surface property of the forming die in contact with the powder. When the spacer 3 is made of a resin, the spacer 3 having a desired surface property can be obtained by using an injection molding process and adjusting the surface property of the forming die in contact with the molten resin. By separately fabricating a plurality of members made of different materials and joining the members by bonding or the like, the spacer 3, which is a composite of different materials, can be obtained.

### REFERENCE SIGNS

1 First glass substrate
2 Second glass substrate
3 Spacer
300 Side surface
301 First contact surface
302 Second contact surface
31 Center portion
3211 First end portion
3212 Second end portion
322 First contact surface
323 Second contact surface
4 Internal space
5 Peripheral edge portion
6 Seal portion
7 Exhaust pipe
100 Multi-layered glass

## Claims

1. A spacer interposed between a first glass substrate and a second glass substrate opposing each other and disposed in contact with the first glass substrate and the second glass substrate, the spacer comprising:
a first contact surface disposed in contact with the first glass substrate;
a second contact surface disposed in contact with the second glass substrate; and
a side surface positioned between the first contact surface and the second contact surface, wherein
a mean value RΔq1 of a root-mean-square slope in a roughness curve of the first contact surface is larger than a mean value RΔq2 of a root-mean-square slope in a roughness curve of the side surface.

2. The spacer according to claim 1, wherein
a mean value Rsk1 of kurtosis in the roughness curve of the first contact surface is larger than a mean value Rsk2 of kurtosis in the roughness curve of the side surface.

3. The spacer according to claim 1 or 2, wherein
the side surface is a fired surface.

4. The spacer according to any one of claims 1 to 3, wherein
a difference between the mean value RΔq1 and the mean value RΔq2 is equal to or greater than 0.05.

5. The spacer according to any one of claims 1 to 4, wherein
the mean value RΔq1 is 0.7 or less.

6. The spacer according to any one of claims 1 to 5 further comprising:
a center portion having a plate shape or a columnar shape, a first end portion protruding from the center portion, and a second end portion positioned on a side opposite to the first end portion and protruding from the center portion, wherein
the side surface is positioned at an outer edge of the center portion,
the first contact surface is positioned at the first end portion,
the second contact surface is positioned at the second end portion, and
a width perpendicular to a height direction of the first end portion is smaller than a width perpendicular to a height direction of the center portion.

7. The spacer according to claim 6, wherein
the first end portion has a spherical cap shape.

8. The spacer according to claim 6 or 7, wherein
a height of the center portion is larger than a total of a height of the first end portion and a height of the second end portion.

9. The spacer according to any one of claims 6 to 8, wherein
an area occupancy of porosity in the first end portion is larger than an area occupancy of porosity in an outer edge of the center portion.

10. The spacer according to any one of claims 1 to 9, wherein
the spacer is a ceramic sintered body containing, as a main constituent, zirconium oxide, mullite, forsterite, cordierite, steatite, alkali metal aluminosilicate, aluminum titanate, or zinc oxide.

11. The spacer according to any one of claims 1 to 10, wherein
the spacer is a ceramic sintered body containing a composite compound of aluminum oxide and zirconium oxide.

12. A multi-layered glass comprising:
the spacer according to any one of claims 1 to 11;
the first glass substrate;
the second glass substrate;
an internal space positioned between the first glass substrate and the second glass substrate;
a peripheral edge portion of the first glass substrate;
a seal portion sealing the peripheral edge portion.

13. The multi-layered glass according to claim 12 comprising:
an exhaust port for exhausting the internal space.
